# EUROPÄISCHE PATENTSCHRIFT

(11) **EP 2 394 500 B1**
(45) Veröffentlichungstag und Bekanntmachung des Hinweises auf die Patenterteilung: **28.08.2013**
(21) Anmeldenummer: 11169464.2
(22) Anmeldetag: 10.06.2011
(51) Int. Cl.: A01B 13/02, A01B 39/14, A01C 9/00, A01C 9/02

(54) **Vorrichtung zum Enddammaufbau**
Device for finishing planting ridges
Dispositif pour le buttage final

(30) Priorität: 14.06.2010 DE 102010030049
(43) Veröffentlichungstag der Anmeldung: 14.12.2011
(73) Patentinhaber: Heiss, Andreas, 85104 Pförring-Dötting (DE)
(72) Erfinder: Heiss, Andreas, 85104 Pförring-Dötting (DE)
(74) Vertreter: Bergmeier, Werner

(56) Entgegenhaltungen:
- EP-A1- 2 158 800
- EP-A2- 2 042 014
- EP-A2- 2 215 903
- DE-U1-202009 008 186
- NL-A- 6 800 460
- NL-A- 9 101 405

## Beschreibung

Die vorliegende Erfindung betrifft ein Dammformblech zum Enddammaufbau nach dem Ausbringen von Pflanzgut, insbesondere Kartoffeln, zum gleichzeitigen Aufbau wenigstens zweier Dämme. Das Dammformblech weist zwei äußere und wenigstens ein mittleres Räumelement auf. An dem Dammformblech ist ein Sech angeordnet.

Im Stand der Technik sind verschiedene Vorrichtungen zum Aufbau eines Dammes nach der Pflanzung von Kartoffeln bekannt geworden. Zum Dammaufbau auf schweren Böden werden die Dämme beispielsweise in einem nachgeordneten Arbeitsgang mittels einer Dammfräse hergestellt. Nachteilig hierbei ist es, dass durch das nachträgliche Fräsen der Dämme in einem zweiten Arbeitsgang ein seitlicher Versatz auftreten kann, was zu einer außermittigen Lage der Knollen innerhalb des Dammes führt. Für den Dammaufbau auf leichteren Böden sind Häufelkörper, Häufelkörper mit Stabwalzen sowie Dammformbleche bekannt, wobei häufig die Kartoffellegemaschinen mit diesem Werkzeugen ausgestattet werden, so dass Pflanzung und Dammaufbau in einem Arbeitsgang stattfinden kann.

Die DE 197 10 036 C2 zeigt eine Kartoffellegemaschine, bei welcher unmittelbar hinter den Furchenziehern an dem Tragrahmen der Maschine eine Dammfräse angeordnet ist. Durch das Legen der Kartoffeln und den Dammaufbau in einem einzigen Arbeitsgang werden die Kartoffeldämme zwangsläufig unmittelbar hinter der Ablagestelle aufgebaut, so dass ein wesentlicher Versatz vermieden werden kann. Insbesondere an Seitenhängen kann es durch die Abdrift der Maschine dennoch zu einem seitlichen Versatz kommen.

Aus der DE 20 2009 008 186 U1 ist eine Kartoffellegemaschine mit einem anschließenden Dammformblech bekannt, welche zum Anbau an die Dreipunkthydraulik eines Schleppers vorgesehen sind. Das Dammformblech ist hierbei mit zwei seitlich am Rahmen des Dammformers befestigten Hangscheiben versehen. Hierdurch soll ein Abrutschen der Maschine in Hanglagen verhindert werden.

Die NL 6800460 A beschreibt eine Vorrichtung mit einem Dammformblech zum Enddammaufbau mit mehreren Räumelementen, wobei ein Werkzeug im Bereich eines Räumelements angeordnet ist.

Aufgabe der vorliegenden Erfindung ist es, eine Vorrichtung zum Enddammaufbau mit einem Dammformblech vorzuschlagen, welche bei guter Führung am Seitenhang ein störungsfreies Arbeiten ermöglicht.

Die Aufgabe wird gelöst mit den Merkmalen des Anspruches 1.

Ein Dammformblech zum gleichzeitigen Aufbau wenigstens zweier Dämme nach dem Ausbringen von Pflanzgut, insbesondere Kartoffeln, weist zwei äußere Räumelemente und wenigstens ein mittleres Räumelement auf, mittels welchem eine Furche zwischen den aufzubauenden Dämmen erzeugt wird. Das Dammformblech kann zum Aufbau verschiedenster Dammformen in verschiedenen Reihenanzahlen ausgeführt sein. Für einen zweireihigen Aufbau ist beispielsweise neben den äußeren Räumelementen lediglich ein mittleres Räumelement vorgesehen, während für einen vierreihigen Aufbau drei mittlere Räumelemente an dem Dammformblech angeordnet sind. Das Dammformblech kann an einen Schlepper oder eine andere landwirtschaftliche Maschine, beispielsweise eine Kartoffellegemaschine oder eine Dammfräse angebaut werden oder bereits fest mit dieser verbunden sein. Ebenso kann das Dammformblech an einer kombinierten Maschine mit einem Kartoffellegeaggregat, einer Bodenvorbereitungseinheit und gegebenenfalls weiteren Aggregaten angeordnet sein. An dem Dammformblech ist wenigstens ein Sech angeordnet, welches bei Fahrt am Seitenhang einem Abdriften entgegenwirkt.

Erfindungsgemäß ist das Sech im Bereich des wenigstens einen mittleren Räumelements als Vorlaufwerkzeug angeordnet. Dadurch, dass das Sech nicht seitlich an einem Rahmen des Dammformbleches, sondern direkt im Bereich der in den Boden eingreifenden Räumelemente angeordnet ist, kann eine besonders gute Stabilisierung des Dammformblechs und hierdurch der gesamten Maschine am Seitenhang erzielt werden. Weiterhin können durch die Anordnung des Sechs direkt vor dem mittleren Räumelement Pflanzenreste aus einem Zwischenfruchtanbau oder auch aus der Winterbegrünung zuverlässig durchtrennt werden. Dies ermöglicht ein störungsfreies Arbeiten sowohl des Sechs wie auch des Dammformers. Bei Vorrichtungen des Standes der Technik konnte es hingegen zu Verstopfungen durch derartige Pflanzenreste und in Folge davon zu einem gestörten Dammaufbau kommen, da die Pflanzenreste sich vor den Räumelementen sammeln und vor diesen hergeschoben werden. Bei größeren Ansammlungen von Pflanzenresten war ein störungsfreies Arbeiten der Räumelemente nicht mehr möglich. Weiterhin kann durch das Sech im Bereich der Furchen zwischen den Dämmen eine Auflockerung des Bodens erzielt werden. Hierdurch wird die Infiltration mit Wasser verbessert und die Erosion des Bodens vermindert. Bei herkömmlichen Dammformblechen kommt es hingegen im Bereich der Furchen häufig zu einem zugestrichenen, glatt verschmierten Boden, was zu verminderter Wasseraufnahme und Erosionsschäden führen kann.

Besonders vorteilhaft ist es hierbei, wenn ein nach vorne gerichteter Trennungskeil des Räumelements einen Durchbruch aufweist und das Sech zumindest teilweise innerhalb des Räumelements läuft. Hierdurch kann das Sech besonders nahe an dem Räumelement angeordnet werden, so dass Pflanzenreste direkt im Bereich des Trennungskeils durchtrennt werden und ein Einklemmen noch vorhandener Pflanzenreste vermieden wird. Zugleich kann bei entsprechender Anordnung und Ausgestaltung das Räumelement eine Abstreiffunktion für das Sech gewährleisten, so dass ein Zusetzen des Sechs mit Pflanzenresten verhindert wird. Die störungsfreie Funktion des Dammformblechs wird hierdurch weiter unterstützt.

Besonders vorteilhaft ist es, wenn das Sech im Inneren des Räumelements gelagert ist und durch den Durchbruch des Trennungskeils des Räumelements hindurchreicht. Die Lagerung des Sechs kann hierdurch in einem geschützten Bereich innerhalb des Räumelements angeordnet werden, so dass auch diese vor einem Zusetzen durch Pflanzenreste und Erde geschützt wird. Die Rotation des Sechs und das störungsfreie Arbeiten kann hierdurch gewährleistet werden.

Nach einer besonders vorteilhaften Weiterbildung der Erfindung ist das Sech als vorzugsweise gezacktes Scheibensech ausgebildet. Dieses ist in besonders guter Weise zum Durchtrennen von Pflanzenresten geeignet. Daneben kann durch die Zacken des Sechs ein Verzahnungseffekt mit dem Boden erreicht werden, so dass dieses eine hohe Drehsicherheit aufweist und nicht lediglich durch den Boden gezogen wird. Auch Pflanzenreste können durch den Verzahnungseffekt zuverlässig ergriffen und durchtrennt oder durch den Boden gezogen werden und werden nicht vor den Sechen hergeschoben.

Ebenso kann jedoch statt eines gezacktes Scheibensechs auch ein gewelltes Scheibensech sinnvoll sein. Durch die seitwärts gerichteten Wellen wird bei der Rotation des Sechs stets etwas Erde ausgeworfen. In den so entstandenen Fehlstellen kann eine erhöhte Menge an Wasser gespeichert werden. Diese Wasserreservoirs wirken einem schnellen Abfließen des Wassers aus der Bewässerung oder von Niederschlägen entgegen, so dass die Versorgung des Pflanzguts mit Wasser verbessert wird.

Nach einer anderen vorteilhaften Weiterbildung der Erfindung ist das Sech in Bezug auf seine Winkelstellung zur Fahrtrichtung verstellbar oder lenkbar, insbesondere hydraulisch lenkbar, an dem Dammformblech angeordnet. Hierdurch kann nicht nur einem Abdriften der Maschine am Seitenhang entgegengewirkt werden, sondern die Maschine kann durch eine entsprechende Stellung des Sechs oder der Seche aktiv hangaufwärts gelenkt werden. Hierdurch ist es möglich, einen seitlichen Versatz des Dammformblechs gegenüber der Maschine bzw. auch gegenüber dem Schlepper nahezu vollständig auszugleichen. Weiterhin ist es möglich, durch die Winkelstellung der Seche die Lage des Pflanzgutes bezogen auf die Lage zur Dammmitte je nach Wunsch einzustellen, um hierdurch stets optimale Bodenbedeckung und optimale Anbaubedingungen für das Pflanzgut zu erreichen. So kann beispielsweise an einem Seitenhang auch eine leicht außermittige, nach hangabwärts versetzte Ablage des Pflanzgutes erwünscht sein, da die Pflanzen das Bestreben haben, senkrecht aus dem Boden herauszuwachsen. Am Seitenhang würde dies jedoch zu einem außermittigen, hangaufwärts versetztem Herauswachsen der Pflanze führen. Dies kann durch die leicht außermittige Ablage hangabwärts ausgeglichen werden und ist durch eine hangaufwärts steuernde Winkelstellung des Sechs oder der Seche problemlos möglich. Zur Winkelverstellung können beispielsweise die Halter der Seche drehbeweglich an dem Räumelement und/oder dem Dammformblech aufgehängt sein, um eine Winkelverstellung zu erreichen. Da der Durchbruch des Trennungskeils jedoch nur eine geringe Verstellbarkeit zulässt, ist es vorteilhaft, die Seche gemeinsam mit den Räumelementen zu verstellen.

Besonders vorteilhaft ist es hierbei, wenn das Dammformblech mehrere mittlere Räumelemente mit jeweils einem zugeordneten Sech beinhaltet, wobei die Seche gemeinsam verstellbar und/oder lenkbar sind. Hierzu sind die Räumelemente oder die Halter der Seche mit einer gemeinsamen Betätigungsstange verbunden, welche vorzugsweise hydraulisch betätigbar ist.

Weiterhin ist es vorteilhaft, wenn das Sech oder die Seche leicht lösbar an dem Dammformblech und/oder den Räumelementen angeordnet sind. Hierdurch können diese jederzeit entfernt werden, wenn eine seitliche Führung nicht erforderlich ist oder wenn es bei entsprechenden Bodenverhältnissen durch die Seche zu einem erhöhten Widerstand kommen würde. Ebenso ist es vorteilhaft, wenn das Sech höhenverstellbar an dem Dammformblech oder dem Räumelement angeordnet ist. Auch hierdurch kann bei ungünstigen Bodenverhältnissen der Widerstand durch das Sech verringert werden. Insbesondere auf steinigen Böden kann durch eine Höhenverstellung das Auflaufen der Seche auf Steinen vermieden werden. Auf steinfreien Böden kann hingegen ein tiefer Eingriff des Sechs realisiert werden. Die Verstellung kann hierbei stufenlos, beispielsweise mittels einer Spindel, oder auch in Stufen, beispielsweise durch verschiedene Befestigungsbohrungen, erfolgen.

Ebenso ist es vorteilhaft, wenn die Räumelemente leicht lösbar an dem Dammformblech angeordnet sind. Die Räumelemente können hierdurch leicht entfernt werden und gegen Räumelemente mit geringerer Tiefe oder einer anderen Flankenform ausgetauscht werden. Sind die Seche mit den Räumelementen verbunden, so können die Räumelemente mit Sechen durch Räumelemente ohne Seche ersetzt werden. Weiterhin ist es möglich, einzelne Räumelemente aus dem Dammformblech zu entnehmen, um beim Kartoffelanbau in Beeten mittels des Dammformbleches ein entsprechendes Beet auszubilden.

Ebenso ist es vorteilhaft, wenn an den Räumelementen und/oder dem Dammformblech Flankenformer und/oder Firstbleche leicht lösbar angeordnet sind. Unter leicht lösbar wird im Sinne der vorliegenden Anmeldung eine jederzeit gute Zugänglichkeit zu den einzelnen Befestigungspunkten verstanden. Vorzugsweise ist zumindest ein Teil der genannten Elemente und/oder zumindest ein Teil der Befestigungspunkte dieser Elemente ohne Werkzeug lösbar, um beispielsweise die Winkelverstellung der Räumelemente mit den Sechen zu ermöglichen.

Weiterhin ist es vorteilhaft, wenn der Durchbruch des Trennungskeils mittels eines Abdeckbleches verschließbar ist. Wird das Sech aus dem Räumelement entnommen, so kann der Durchbruch im Trennungskeil mittels des Abdeckbleches verschlossen werden und hierdurch wiederum ein störungsfreies Arbeiten des Räumelements gewährleistet werden.

Eine vorteilhafte Weiterbildung der Erfindung sieht vor, dass dem Sech wenigstens ein Abstreifer zugeordnet ist. Dieser kann beispielsweise an dem Räumelement oder an dem Halter des Sechs befestigt sein und verhindert ebenfalls das Zusetzen der Räumelemente und des Sechs durch Erd- und Pflanzenreste.

Nach einer anderen vorteilhaften Ausführung der Erfindung ist im Wesentlichen mittig zwischen zwei Räumelementen jeweils ein Muldenformer an dem Dammformblech angeordnet. Dieser ist vorzugsweise V-förmig ausgebildet und erzeugt im Einsatz mittig auf dem Dammrücken eine fortlaufende Mulde. Bei einem Verfahren zum Pflanzen von Kartoffeln wird entsprechend jeweils mittig auf dem Dammrücken bzw. im Bereich der Dammspitze eine fortlaufende Mulde in den entstehenden Damm gezogen.

Hierdurch kann eine geringere Erdüberdeckung der Saatkartoffel bewirkt werden, welche zu einem verbesserten Angebot an Licht und Wasser für die Pflanze führt. Dies führt zunächst zu einem schnelleren Aufwuchs der Kartoffelpflanze. Die seitlich neben der Mulde noch stehenden Dammspitzen sorgen hierbei in vorteilhafter Weise dafür, dass die noch empfindliche Kartoffelpflanze vor Frost und Wind geschützt ist. Durch das erfindungsgemäße Ziehen einer Mulde über der Knolle können somit optimale Wachstumsbedingungen für die Kartoffelpflanzen bereitgestellt werden, was eine vorteilhafte frühe Ernte und einen verbesserten Ertrag der Kartoffeln ermöglicht. Bei einer herkömmlichen Dammform führt hingegen eine geringere Erdüberdeckung unweigerlich zu Problemen, sobald ungünstige Witterungsbedingungen vorherrschen und die Pflanze Frost ausgesetzt ist. Insbesondere beim Anbau von Frühkartoffeln kann die Dammform mit einer mittig in den Dammrücken eingebrachten Mulde daher vorteilhaft eingesetzt werden. Ein Dammformblech mit einem oder mehreren Muldenformern sowie das Anbauverfahren, bei welchem eine mittige Mulde in den Dammrücken gezogen wird, ist unabhängig von der Führung des Dammformblechs durch Seche vorteilhaft und besitzt daher selbstständig erfinderische Bedeutung.

Vorteilhaft ist es hierbei, wenn der Muldenformer eine Bauhöhe von maximal 40 % der Höhe der Räumelemente aufweist. Es hat sich gezeigt, dass bei einem derartigen Größenverhältnis ein optimales Verhältnis zwischen der für die Knolle erforderlichen Erdüberdeckung, einem verbesserten Angebot an Licht und Wasser für die Pflanze sowie einer Vermeidung einer Knollenergrünung durch ein Überangebot an Licht andererseits geschaffen werden kann.

Nach einer vorteilhaften Ausführungsform der Erfindung ist der Muldenformer bezogen auf die Fahrtrichtung in einer Linie mit den Räumelementen angeordnet. Die Mulde wird somit fortlaufend unmittelbar in den entstehenden Damm gezogen, so dass der Damm mit der Mulde besonders stabil ist. Der Muldenformer kann hierbei direkt an einem Rahmen des Dammformlechs oder auch an einem Firstblech angeordnet sein.

Nach einer anderen Ausführung der Erfindung ist es jedoch ebenso möglich, den oder die Muldenformer bezogen auf die Fahrtrichtung hinter den Räumelementen, beispielsweise an einem Firstblech des Dammformblechs anzuordnen.

Werden mittels eines Dammformblechs wenigstens zwei Dämme mit jeweils einer dazwischenliegenden Furche gleichzeitig aufgebaut, so ist es vorteilhaft, wenn wenigstens ein Räumelement des Dammformblechs austauschbar und/oder höhenverstellbar an dem Dammformblech angeordnet ist. Üblicherweise beinhaltet ein Dammformblech wenigstens zwei äußere Räumelemente und wenigstens ein dazwischen angeordnetes mittleres Räumelement zur Erzeugung der Furchen und Formung oder Vorformung der Dammflanken. Ist das wenigstens eine mittlere Räumelement austauschbar und/oder höhenverstellbar an dem Dammformblech angeordnet, so kann zumindest eine mittlere Furche mit einer geringeren Tiefe erzeugt werden. Hierdurch wird eine Kombination des Anbaus im Beetverfahren mit einem Anbau in Dämmen erreicht, welche die spezifischen Vorteile beider Verfahren in günstiger Weise verbindet. Durch die Kombination der beiden Verfahren können insbesondere können Vorteile in Bezug auf die Überdeckung des Pflanzguts und die Wasser- und Nährstoffversorgung erzielt werden. Ebenso kann jedoch mit demselben Dammformblech ein Anbau im herkömmlichen Dammverfahren durchgeführt werden.

Vorteilhaft ist es hierbei, wenn das wenigstens eine mittlere Räumelement eine wesentlich geringere Arbeitshöhe aufweist als die Äußeren. Es kann somit beispielsweise ein Damm für eine Doppelreihe erzeugt werden, bei welchem die mittlere Furche nur eine geringe Tiefe aufweist. Hierdurch wird eine bessere Wasserversorgung als im Dammverfahren erreicht, die spätere Ernte ist im Vergleich zum Beetverfahren jedoch erleichtert, da insgesamt weniger Erde bewegt werden muss.

Nach einer vorteilhaften Weiterbildung der Erfindung sind den Räumelementen zusätzliche Flankenformer zugeordnet, welche eine den Räumelementen entsprechende Arbeitshöhe aufweisen. Ein günstiger Dammaufbau wird hierdurch unterstützt und die Ausbildung verschiedener Dammformen ermöglicht.

Das Dammformblech kann hierbei in jeder beliebigen Reihenanzahl ausgeführt sein. Ist das Dammformblech dreireihig ausgeführt, weist dieses beispielsweise zwei äußere feste und zwei dazwischen angeordnete mittlere austauschbare oder höhenverstellbare Räumelemente auf. Ebenso kann bei einer mehrreihigen Ausführung des Dammformblechs eine Anordnung in Doppelreihen vorgesehen sein, wobei jede Doppelreihe zwei äußere feste und jeweils ein mittleres höhenverstellbares Räumelement aufweist.

Weiterhin können bei einer mehrreihigen Ausführung des Dammformblechs auch sämtliche mittleren Räumelemente herausnehmbar sein, so dass mittels des Dammformblechs auch ein Beet für den Anbau im Beetverfahren aufgebaut werden kann.

Weitere Vorteile der Erfindung werden anhand der nachfolgend dargestellten Ausführungsbeispiele beschrieben.

Es zeigen:
- **Figur 1**: Eine Übersichtsdarstellung eines Dammformblechs, welches an einer kombinierten Maschine angebaut ist,
- **Figur 2**: eine Darstellung eines erfindungsgemäßen Dammformbleches, bei welchem im Bereich der mittleren Räumelemente Seche als Vorlaufwerkzeuge angeordnet sind,
- **Figur 3**: eine perspektivische Darstellung eines herausnehmbaren Räumelements mit einem Sech,
- **Figur 4**: eine schematische Darstellung der Lagerung des Sechs in einem Räumelement in einer Rückansicht,
- **Figur 5**: eine schematische Draufsicht auf ein erfindungsgemäßes Dammformblech mit gemeinsam verstellbaren Sechen,
- **Figur 6**: eine Darstellung eines Räumelements mit einem Abdeckblech,
- **Figur 7**: eine Darstellung eines Räumelements mit einem Sech und dem Sech zugeordneten Abstreifern in einer Rückansicht,
- **Figur 8**: eine Darstellung eines erfindungsgemäßen Dammformblechs mit zusätzlichen Muldenformern,
- **Figur 9**: eine schematische Darstellung eines Damms, welcher mit dem Dammformblech der Figur 8 erzeugt wurde,
- **Figuren 10 - 12**: verschiedene Ausführungen eines Dammformblechs mit austauschbaren oder höhenverstellbaren mittleren Räumelementen,
- **Figur 13**: ein Dammformblech mit zugeordneten Flankenformern,
- **Figur 14**: eine schematische Darstellung eines Dammaufbaus in einem herkömmlichen Dammverfahren, sowie
- **Figur 15**: eine schematische Darstellung eines Dammaufbaus in einem mit einem Beetverfahren kombinierten Dammverfahren.

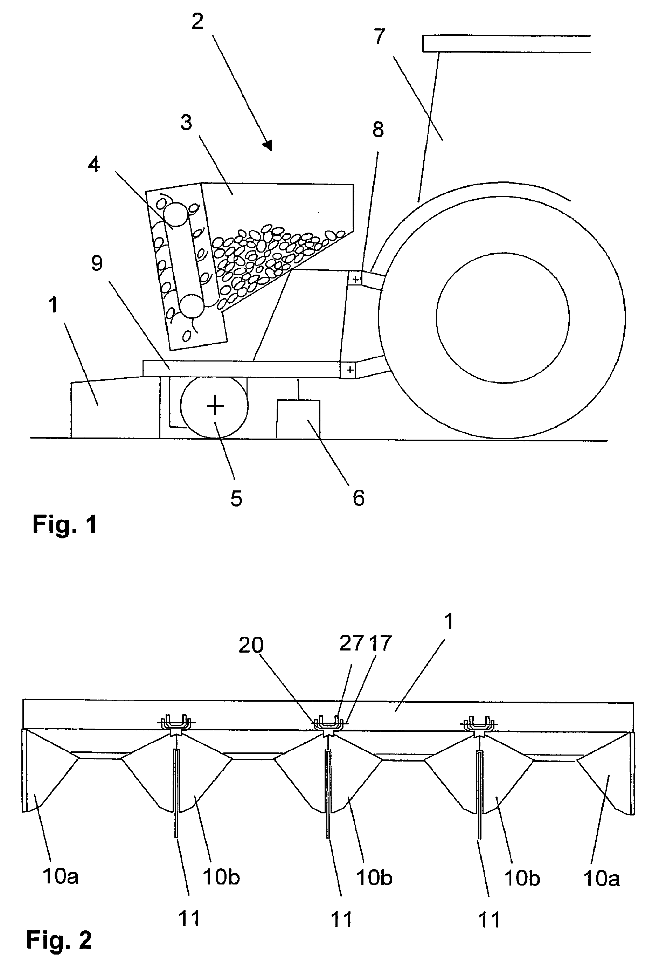

Figur 1 zeigt eine Übersichtsdarstellung eines erfindungsgemäßen Dammformbleches 1, welches vorliegend an einer kombinierten Kartoffellegemaschine 2 angeordnet ist. Die kombinierte Kartoffellegemaschine 2 ist hierbei als Aushebemaschine zum Anbau an eine Dreipunktkupplung 8 eines Schleppers 7 vorgesehen. Ebenso kann die Kartoffellegemaschine 2 auch als gezogene Maschine ausgeführt sein. Anstelle der Kartoffellegemaschine 2 kann das Dammformblech 1 auch lediglich mit einer Dammfräse verbunden sein oder als separate Einheit zum Anbau an eine beliebige Maschine vorgesehen sein. Die kombinierte Kartoffellegemaschine 2 beinhaltet weiterhin ein Lockerungswerkzeug 6, beispielsweise eine Kreiselecke, einen Vorratsbehälter 3, eine Entnahmeeinrichtung 4 für die Kartoffeln aus dem Vorratsbehälter 3 sowie eine Setzschar 5, welche vorliegend als Scheibenschar ausgebildet ist. Die genannten Einrichtungen sind hierbei an einem Maschinenrahmen 9 der Kartoffellegemaschine 2 angeordnet. Mittels der gezeigten kombinierten Kartoffellegemaschine 2 ist es in besonders vorteilhafter Weise möglich, die Arbeitsgänge Saatbeetbereitung, Saatgutablage sowie Enddammaufbau in einem einzigen Arbeitsgang durchzuführen, wodurch Probleme mit einem Versatz einander nachfolgender Werkzeuge und hieraus folgender Ertragsverminderung sowie Probleme durch eine übermäßige Bodenverdichtung beim mehrmaligem Überfahren des Bodens vermieden werden können.

Figur 2 zeigt das Dammformblech 1 in einer schematischen Vorderansicht. Das Dammformblech 1 beinhaltet zwei äußere Räumelemente 10a sowie nach vorliegender Darstellung drei mittlere Räumelemente 10b, so dass mittels des gezeigten Dammformbleches 1 der Dammaufbau vierreihig erfolgen kann. Selbstverständlich sind auch beliebige andere Ausführungen bezüglich der Reihigkeiten, beispielsweise zweireihige, sechsreihige oder achtreihige Ausführungen mit einer entsprechenden Anzahl mittlerer Räumelemente 10b möglich. Weiterhin kann auch der Aufbau von Doppeldämmen vorgesehen sein, wobei mehrere Kombinationen aus jeweils zwei äußeren Räumelementen 10b und einem mittleren Räumelement 10a an dem Dammformblech angeordnet sind.

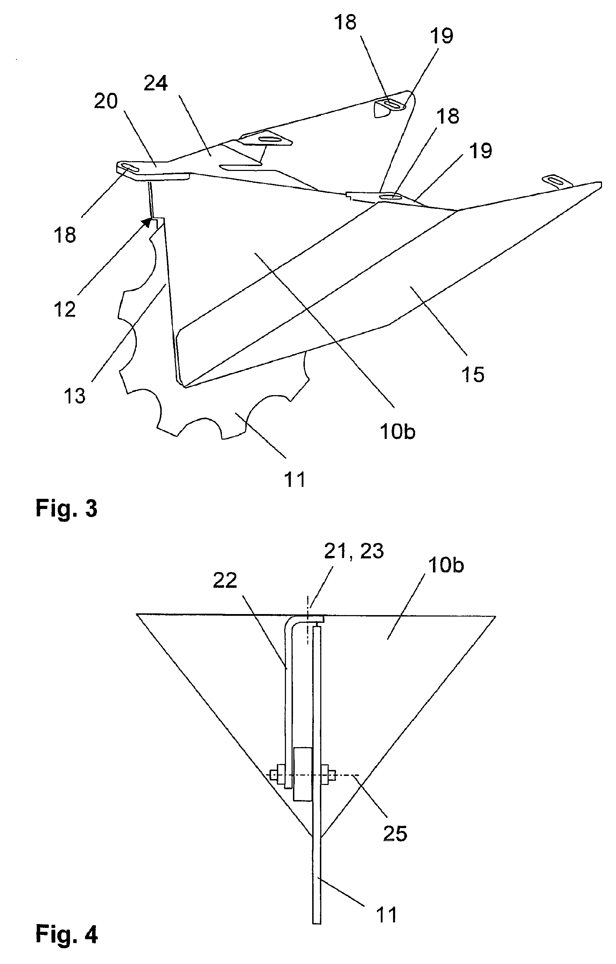

Figur 3 zeigt eine Detaildarstellung eines einzelnen mittleren Räumelements 10b, wobei erfindungsgemäß ein Sech 11 im Bereich des mittleren Räumelements 10b als Vorlaufwerkzeug angeordnet ist. Das Sech 11 ist hierbei im Inneren des Räumelements 10b gelagert (siehe Figur 4), wobei es einen Durchbruch 13 eines nach vorne gerichteten Trennungskeils 12 des Räumelements 10b durchbricht und somit dem Räumelement 10b als Vorlaufwerkzeug vorgeschaltet ist. Durch die gezeigte Anordnung kann in optimaler Weise eine besonders gute seitliche Stabilisierung des Dammformblechs 1 bzw. der Maschine 2 am Seitenhang ermöglicht werden, da die Seche 11 direkt im Bereich der in den Boden eingreifenden Räumelemente 10b arbeiten und bis in den festen Boden hineinreichen. Hierdurch kann ein Spiel in der Aufhängung des Dammformbleches ausgeglichen werden und einer schwerkraftbedingten seitlichen Abdrift der hinter dem Schlepper angeordneten Maschine entgegengewirkt werden.

Zugleich werden durch das den Räumelementen 10b vorlaufende Sech Pflanzenreste aus einem Zwischenfruchtanbau oder aus der Winterbegrünung zerkleinert. Die Seche verhindern somit, dass die Pflanzenteile sich vor dem Trennungskeil 12 sammeln und zu Verstopfungen der Räumelemente führen. Hierdurch kann ein jederzeit einwandfreier Dammaufbau gewährleistet werden. Die Pflanzenreste werden hierbei vorteilhaft zerkleinert und verbleiben im Saatbeet, wo sie eine Düngewirkung entfalten können. Zugleich wird durch das Zerkleinern der Pflanzenreste jederzeit ein störungsfreies Arbeiten der Scheibenseche 11 und eine optimale Führung der Maschine 2 am Seitenhang gewährleistet, da ein Zusetzen der Seche 11 mit Erde und Pflanzenresten ebenfalls verhindert wird. Da aufgrund neuerer Erosionsschutzgesetze an vielen Ackerbaustandorten ein Kartoffelanbau nur noch mit einem Zwischenfruchtanbau erlaubt ist, kann mittels des erfindungsgemäßen Dammformbleches 1 eine besonders gute Bearbeitung dieser Flächen sichergestellt werden.

Durch die Anordnung des Sechs 11 zumindest teilweise im Inneren des Räumelements 10b kann das zuverlässige Arbeiten des Sechs 11 weiterhin unterstützt werden, da Flankenformer 15 des Räumelements 10b oder auch das Räumelement selbst die Funktion eines Abstreifers übernehmen und Pflanzenreste von dem Sech abstreifen. Verstopfungen durch Pflanzenreste können hierdurch vermieden werden. Vorzugsweise ist das Sech 11 als gezacktes Scheibensech ausgeführt, welches für die Durchtrennung von Pflanzenresten sowie für das Arbeiten in festerem Boden besonders geeignet ist.

Die Anordnung des Sechs 11 als Vorlaufwerkzeug ist jedoch auch möglich, wenn dieses mittels eines Halters 22 nicht innerhalb des Räumelements 10b sondern direkt an dem Dammformblech 1 im Bereich vor dem Räumelement 10b angeordnet ist. Auch bei einer derartigen Ausführung kann ein Durchbruch 13 im Trennungskeil 12 des Räumelements 10b vorgesehen sein, so dass das Sech 11 ebenfalls zumindest teilweise innerhalb des Räumelements 10b läuft.

Figur 4 zeigt eine schematische Darstellung der Befestigung des Sechs 11 im Inneren des Räumelements 10b in einer Rückansicht. Das Sech 11 ist vorliegend über einen Halter 22 an einem oberen Deckblech 24 des Räumelements 10b mittels eines Befestigungselements 21 befestigt, wie durch die strichpunktierte Linie angedeutet. Das Sech 11 kann hierbei um eine vertikale Achse 23, welche senkrecht zur Drehachse 25 des Sechs liegt, verstellbar an dem Räumelement 10b angeordnet sein. Das Sech 11 kann hierdurch in eine Winkelstellung gegenüber der Fahrtrichtung gebracht werden, um das Dammformblech 1 bzw. die Maschine 2, an welcher es angeordnet ist, aktiv zu steuern. Hierdurch ist es möglich, je nach Gefälle und gewünschter Pflanzgutablage mittig oder leicht außermittig, die Wirkung der Seche 11 einzustellen.

Der Durchbruch 13 in dem Trennungskeil 12 lässt jedoch nur einen geringen Verstellweg zu. Nach einer anderen vorteilhaften Ausführung der Erfindung wird daher das gesamte Räumelement 10b, an welchem das Sech 11 über seinen Halter 22 befestigt ist, gegenüber dem Dammformblech 1 verstellt. Die Befestigungsvorrichtung 20 im vorderen Bereich des Räumelements 10b (siehe Fig. 3) weist hierzu eine als Langloch ausgeführte Befestigungsbohrung 18 auf. Hintere und seitliche Befestigungspunkte bzw. Befestigungslaschen 19 sind beispielsweise durch Langlöcher ebenfalls mit Spiel ausgeführt, so dass nach Lösen der Befestigung eine Winkelverstellung des Räumelements 10b mitsamt dem Sech 11 erfolgen kann.

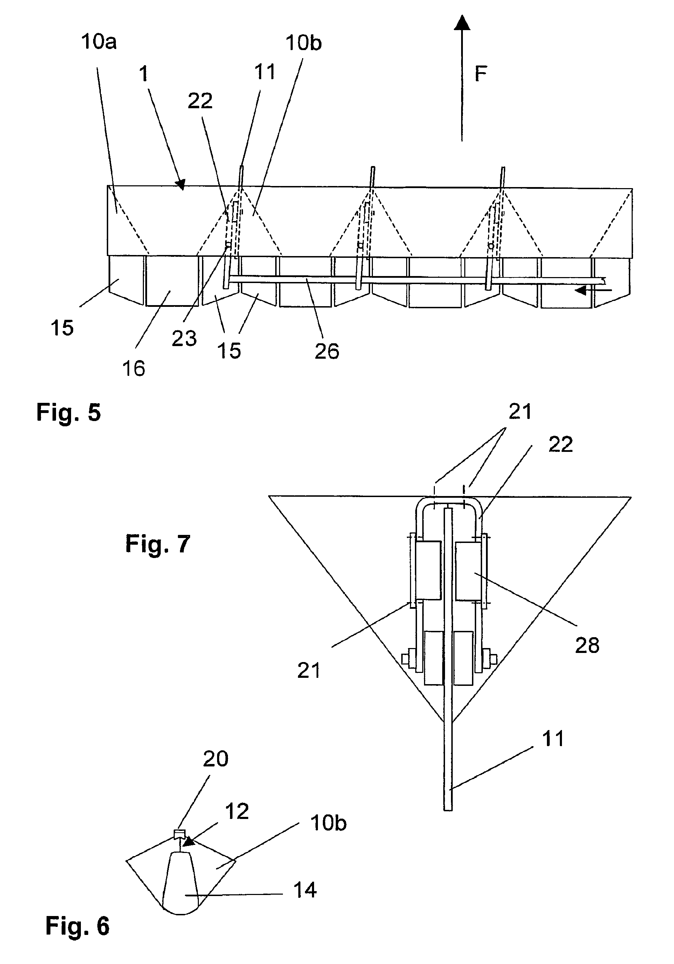

Figur 5 zeigt eine Ausführung der Erfindung, bei welcher mehrere mittlere Räumelemente 10b an dem Dammformblech 1 angeordnet sind, wobei jedem mittleren Räumelement 10b jeweils ein Sech 11 zugeordnet ist. Selbstverständlich ist es auch möglich, zusätzlich im Bereich der äußeren Räumelemente 10a verstellbare oder nicht verstellbare Seche 11 anzuordnen. Ebenso können zusätzlich Seche 11 an dem Rahmen des Dammformbleches 1 direkt angeordnet sein. Durch die erfindungsgemäße Anordnung der Seche 11 als Vorlaufwerkzeuge der mittleren Räumelemente 10b und die hierdurch erzielte besonders gute Führung ist dies jedoch nicht unbedingt erforderlich.

Nach der in Fig. 5 gezeigten Darstellung sind die Halter 22 der Seche 11 mittels einer Betätigungsstange 26 verbunden, so dass diese gemeinsam verstellt werden können. Die Betätigung der Betätigungsstange 26 kann hierbei hydraulisch erfolgen. Um einen größeren Verstellweg zu ermöglichen, werden die Räumelemente 10b gemeinsam mit den Haltern 22 der Seche 11 verstellt. Vorliegend erfolgt die Betätigung über die Halter 22 der Seche 11, welche die Räumelement 10b mitnehmen. Die Betätigungsstange 26 kann jedoch auch im Bereich der vorderen Befestigungsvorrichtungen 20 (siehe Fig. 3) angreifen, um die gemeinsame Verstellung zu realisieren.

Wie weiterhin aus der Draufsicht der Figur 5 ersichtlich, können den Räumelementen 10 jeweils seitlich angeordnete Flankenformer 15 sowie oberhalb angeordnete Firstbleche 16 zugeordnet sein. Diese sind leicht lösbar mit den Räumelementen 10 und/oder dem Dammformblech 1 verbunden. Beispielsweise können die Flankenformer 15, wie in Figur 3 ersichtlich, mit Befestigungslaschen 19 versehen sein, mittels welcher sie an entsprechenden Haken (nicht dargestellt) des Dammformbleches 1 lediglich eingehängt werden. Ebenso ist es jedoch auch möglich, die Flankenformer 15 durch die Befestigungsbohrungen 18 der Laschen 19 zu verschrauben. Ebenso können die Räumelemente 10 über entsprechende Laschen 19 mit Befestigungsbohrungen 18 verfügen und an dem Dammformblech 1 eingehängt oder mit diesem verschraubt werden. Eine weitere Befestigungsvorrichtung 20 (siehe Fig. 3) ist im vorderen Bereich des Räumelements 10b angeordnet und kann durch ein Befestigungsmittel 21 (hier nicht dargestellt) mit einer entsprechenden Aufnahme 27 des Dammformbleches 1 verbunden werden.

Figur 2 zeigt eine alternative Befestigungsvorrichtung 20 im vorderen Bereich der Trennelemente 10b. Diese ist ebenso wie die Aufnahme 27 des Dammformbleches 1 im Wesentlichen u-förmig ausgebildet und ermöglicht eine einfache Verbindung der Räumelemente 11 mit dem Dammformblech 1 durch ein Befestigungsmittel 21, beispielsweise einen Bolzen oder eine Schraubverbindung. Die Befestigungsvorrichtung 20 ist leicht zugänglich und ermöglicht somit den leichten Ausbau der Räumelemente 10.

Dadurch, dass sämtliche Formteile wie Räumelemente 10, Flankenformer 15, Firstbleche 16 und gegebenenfalls die Seche 11 leicht lösbar an dem Dammformblech 1 angeordnet sind, kann dieses mit hoher Flexibilität eingesetzt werden. Dadurch, dass sämtliche Befestigungen der Formteile leicht lösbar sind bzw. eventuelle Verschraubungen leicht zugänglich sind, ist ein Austausch oder Ausbau der Formteile in kurzer Zeit leicht möglich. So können bei einem vierreihigen Dammformblech 1, wie vorliegend gezeigt, die mittleren Räumelemente 10b entnommen werden, um mittels des Dammformbleches 11 ein Beet aufzubauen, oder es kann nur ein Teil der mittleren Räumelemente 10b entnommen werden, um beispielsweise Doppeldämme aufzubauen. Weiterhin ist es möglich, eines oder mehrere der mittleren Räumelemente 10b durch Räumelemente 10b mit einer geringeren Arbeitshöhe auszutauschen, so dass ein Damm erzeugt werden kann, welcher anstelle von Furchen lediglich kleine Einschnitte aufweist. Hierdurch ist eine Kombination eines Beetanbauverfahrens mit einem Dammanbau in besonders vorteilhafter Weise möglich. Ebenso kann auch ein Ausbau, ein Austausch oder eine Verstellbarkeit der äußeren Räumelemente 10a vorgesehen sein.

Figur 6 zeigt ein Räumelement 10b, bei welchem der Durchbruch 13 des Trennungskeils 12 durch ein Abdeckblech 14 verschlossen werden kann. Hierdurch ist es möglich, das Räumelement 10b auch bei ausgebautem Sech voll funktionsfähig weiter zu verwenden. Das Abdeckblech 14 dient hierbei zugleich der Verstärkung des Trennungskeils 12.

Figur 7 zeigt eine Ausführung der Erfindung, bei welcher dem Sech 11 zusätzlich ein Abstreifer 28 zugeordnet ist. Der Halter 22 ist vorliegend als doppelseitiger Halter 22 ausgebildet, wobei auf jeder Seite des Halters 22 ein Abstreifer 28 angeordnet ist. Die Abstreifer 28 sind hierbei schräg gegen das rotierende Sech 11 angestellt, um eine besonders gute Abstreifwirkung zu erzielen. Die Abstreifer sind hierbei in Fahrtrichtung hinter dem Halter und der Drehachse 25 des Sechs 11 angeordnet, so dass diese Anhaftungen an dem Sech 11 abstreifen, bevor diese in das Innere des Räumelements 10b gelangen. Verstopfungen im Bereich des Räumelements 10b und der Lagerung des Sechs 11 können hierdurch vermieden werden. Das störungsfreie Arbeiten der Seche 11 ist hierdurch jederzeit sichergestellt.

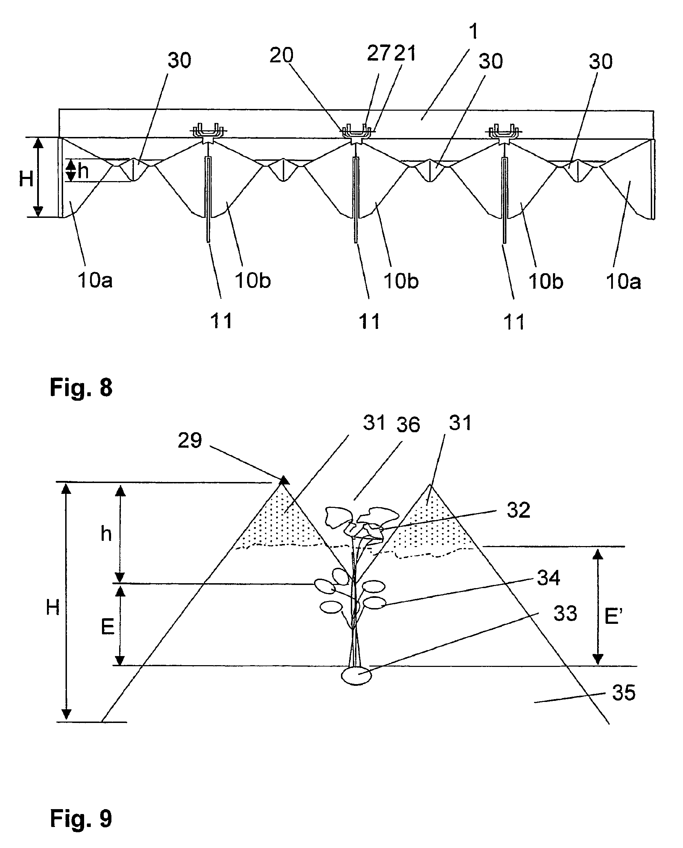

Figur 8 zeigt eine Ausführung eines Dammformblechs 1, bei welchem jeweils mittig zwischen zwei Räumelementen 10a, 10b jeweils ein Muldenformer 30 an dem Dammformblech 1 angeordnet ist. Der Muldenformer 30 ist vorliegend ähnlichen den Räumelementen 10a, 10b, im Wesentlichen V-förmig ausgebildet, so dass während der Dammformung eine fortlaufende V-förmige, mittige Mulde 36 in den Dammrücken 29 gezogen wird (vgl. Fig. 9). Durch die im bepflanzten Damm 35 über den Saatkartoffeln 33 liegende Mulde 36 sind die Saatkartoffeln mit einer nur geringeren Erdüberdeckung E bedeckt. Die übrige Dammform ist hiervon nicht berührt, so dass dennoch vorteilhafte volumige Dämme 35 aufgebaut werden. Die Saatkartoffeln 33 keimen hierdurch schneller und die Kartoffelpflanzen 32 erhalten hierdurch verbesserte Licht- und Bewässerungsbedingungen. Durch die Mulden 36 kann hierbei auch einem zu schnellen Abfluss von Wasser entgegengewirkt werden. Trotz des früheren Aufgangs der Saatkartoffeln 33 sind jedoch keine Schäden durch Frost zu erwarten, da die Kartoffelpflanze 32 durch die seitlich neben der Mulde 36 stehenden Dammspitzen 31 vor Witterung geschützt steht.

Im Laufe der Zeit wird durch natürliche Erosion durch Bewässerung und Niederschlag die Erde von den Dammspitzen 31 in die Mulde 36 abgetragen, so dass sich selbsttätig wieder eine herkömmliche Dammform einstellt, wie durch die strichpunktierte Linie angedeutet. Die Erdüberdeckung E' über den Kartoffeln 34 wird hierdurch wieder erhöht, so dass einer Ergrünung der Sprossknollen 34 durch zu viel Lichteinfall entgegengewirkt wird. Mit dem erfindungsgemäßen Anbauverfahren mit dem Einbringen einer Mulde 36 über den Saatkartoffeln 33 bzw. einem Dammformblech 1 mit Muldenformern 30 kann somit der Aufwuchs, insbesondere bei Frühkartoffeln, beschleunigt werden und der Ertrag erhöht werden, da durch die besondere Dammform zugleich ein wirksamer Schutz gegen Witterung bewirkt wird und ein Ergrünen dennoch vermieden wird.

Bezüglich der Stabilität des Damms 35 und der späteren erwünschten Erosion der Dammspitzen 31 in die Mulde 36 ist eine V-förmige Mulde 36 vorteilhaft, es sind jedoch auch andere Muldenformen bzw. Querschnitte und somit andere Formen des Muldenformers 30 möglich.

In Figur 8 ist hierbei ein Dammformblech 1 gezeigt, bei welchem die Muldenformer 30 ähnlich wie die Räumelemente 10a, 10b direkt an einem Rahmen des Dammformblechs 1 und in einer Linie mit diesen - bezogen auf die Fahrtrichtung - angeordnet sind. Es ist jedoch ebenso möglich, die Muldenformer 30 beispielsweise an einem Firstblech 16 (vgl. Fig. 5) anzuordnen.

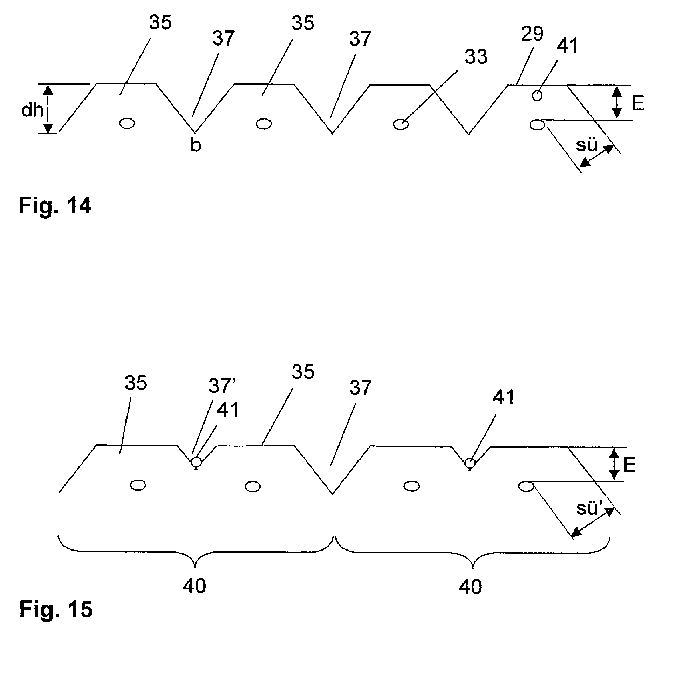

Figur 14 zeigt einen Dammaufbau, wie er mittels eines herkömmlichen Dammformblechs 1 erzeugt wird, um Kartoffeln in einem herkömmlichen Dammverfahren anzubauen. Vorliegend ist ein vierreihiger Aufbau gezeigt, ebenso sind jedoch Dammformbleche 1 bekannt, welche in einem Arbeitsgang drei Dämme 35 oder eine andere Anzahl von Dämmen aufbauen. Vorliegend sind vier Dämme 35 mit jeweils regelmäßig tiefen dazwischenliegenden Furchen 37 dargestellt. Eine exakt mittige Ablage der Saatkartoffeln 33, bezogen auf den Damm 35, und gleichmäßige obere Erdüberdeckung E sowie seitliche Überdeckung sü ist hierbei von enormer Bedeutung, da bereits geringe Abweichungen zu einem seitlichen Wachsen der Knollennester oder sogar zu einem seitlichen Herauswachsen führen können. Da heute bekannte, leistungsfähige Kartoffelsorten eine tiefe Ablage erfordern, kann jedoch nicht immer eine ausreichende seitliche Überdeckung sü sichergestellt werden. Durch eine größere Dammbreite kann zwar eine günstige seitliche Überdeckung sichergestellt werden, der Ertrag ist jedoch im Vergleich zu schmäleren Dämmen um ca. 10 % verringert.

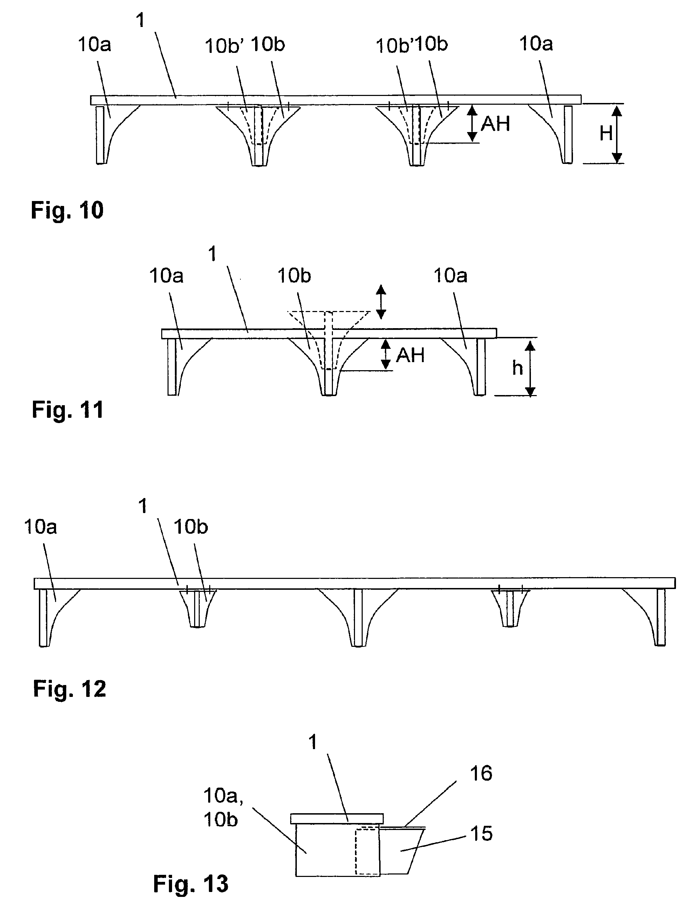

Es ist daher ein mit einem Beetverfahren kombinierter Anbau im Dammverfahren vorgesehen, was in günstiger Weise mit einem Dammformblech 1, wie in den Figuren 10 - 12 gezeigt, möglich ist.

Figur 15 zeigt einen derartigen mit einem Beet kombinierten Dammaufbau, welcher vorliegend ebenfalls vier Dämme 35 umfasst. Die vier Dämme 35 sind in zwei Doppelreihen 40 ausgebildet, wobei zwischen den Doppelreihen 40 eine Furche 37 mit regelmäßiger Tiefe, entsprechend der Dammhöhe dh ausgebildet ist. Zwischen den beiden Pflanzreihen einer Doppelreihe 40 ist hingegen eine Furche 37' mit einer gegenüber der Dammhöhe dh deutlich verringerten Tiefe ausgebildet.

Durch die Ausbildung wenigstens einer niedrigeren Furche 37' zwischen zwei Reihen kann eine verbesserte seitliche Überdeckung sü der Saatkartoffeln 33 erzielt werden. Besonders vorteilhaft ist es hierbei, wenn der Reihenabstand zwischen den beiden Reihen einer Doppelreihe 40 gegenüber dem in Figur 14 gezeigten regelmäßigen Abstand verringert ist. Hierdurch kann eine gegenüber einer regelmäßigen Ausbildung deutlich verbesserte seitliche Überdeckung sü erzielt werden. Das seitliche Herauswachsen wird somit verhindert und der Grünanteil des Ertrags vermindert.

Zudem wird durch das im Vergleich zu einem regelmäßigen Dammaufbau erhöhte Erdvolumen das Wasseraufnahmevermögen und Wasserrückhaltevermögen des Dammaufbaus verbessert, was ebenfalls zur Ertragssteigerung beiträgt. Im Gegensatz zu einem reinen Beetverfahren ist das bei der späteren Ernte zu bewegende Erdvolumen dennoch vergleichsweise gering. Ein Befahren des Dammaufbaus ist durch die Furchen 37 bzw. den größeren Abstand zwischen zwei Doppelreihen 40 im Gegensatz zu einem reinen Beetverfahren dennoch möglich.

Durch den in Figur 15 dargestellten Dammaufbau mit einer Furche 37' mit verringerter Tiefe ist zudem die Tröpfchenbewässerung erleichtert. Im Stand der Technik war es erforderlich, einen Schlauch 41 für die Tröpfchenbewässerung bereits beim Legen des Pflanzguts in jedem Dammrücken 29 zu verlegen (s. Fig. 14), da bei einer nachträglichen Verlegung der bereits erzeugte Damm wieder zerstört wird. Bei dem Dammaufbau nach Fig. 15 kann hingegen die Furche 37' mit geringerer Tiefe als Mulde für den Bewässerungsschlauch 41 genutzt werden. Der Schlauch 41 kann somit nur bei Bedarf auch nachträglich in der Furche 37' verlegt werden. Besonders vorteilhaft ist es hierbei, dass mit nur einem Schlauch 41 zwei Reihen bewässert werden können. Durch die niedrige Ausbildung der Furche 37' kann das Wasser beide Reihen erreichen und ein zu schneller Abfluss des Wassers wird verhindert.

Figur 10 zeigt ein Dammformblech 1 zum Enddammaufbau, welches einen Dammaufbau bzw. ein kombiniertes Anbauverfahren wie in Figur 15 beschrieben in günstiger Weise ermöglicht. Das Dammformblech 1 ist zum gleichzeitigen Aufbau mehrerer Dämme 35, vorliegend drei, mit jeweils dazwischenliegenden Furchen 37 ausgebildet. Das Dammformblech 1 beinhaltet wenigstens zwei äußere Räumelemente 10a mit einer Arbeitshöhe H sowie je nach Reihenzahl ein oder mehrere dazwischenliegende mittlere Räumelemente 10b. Vorliegend sind die beiden mittleren Räumelemente 10b austauschbar an dem Dammformblech 1 angeordnet. Diese können somit in einfacher Weise gegen Räumelemente 10b' mit einer geringeren Arbeitshöhe H' ausgetauscht werden. Hierdurch ist es möglich, Dämme 35 aufzubauen, zwischen welchen eine Furche 37' mit einer geringeren Tiefe als die der Furchen 37 angeordnet ist. Hierdurch können besonders günstige Wachstumsbedingungen für das Pflanzgut geschaffen werden. Ebenso können jedoch mit demselben Dammformblech 1 auch herkömmliche Dämme 35 mit regelmäßig tiefen Furchen 37 aufgebaut werden.

Nach Darstellung der Figur 11 ist zumindest ein mittleres Räumelement 10b nicht austauschbar, sondern höhenverstellbar an dem Dammformblech 1 angeordnet. Auch hierdurch kann eine geringere Arbeitshöhe H' des mittleren Räumelements 10b erreicht werden. Vorliegend ist das Dammformblech 1 zum gleichzeitigen Aufbau von zwei Dämmen 35 mit einer dazwischenliegenden Furche 37' vorgesehen. Nach dem Wenden wird neben der bereits aufgebauten Doppelreihe 40 die nächste Doppelreihe 40 hergestellt, wobei zwischen den beiden Doppelreihen 40 eine Furche 37 mit größerer Tiefe durch die äußeren Räumelemente 10a mit der größeren Arbeitshöhe H erzeugt wird.

Figur 12 zeigt weiterhin ein Dammformblech 1, welches zum Aufbau zweier Doppelreihen 40, wie in Figur 15 beschrieben, ausgebildet ist. Das Dammformblech 1 weist hierzu je Doppelreihe 40 zwei äußere feste Räumelemente 10a mit einer Arbeitshöhe H sowie jeweils ein dazwischenliegendes Räumelement 10b mit einer geringeren Arbeitshöhe H' auf.

Figur 13 zeigt eine Weiterbildung der Erfindung, wonach den Räumelementen 10a, 10b Flankenformer 15 und/oder Firstbleche 16 zugeordnet sind, mit welchen in an sich bekannter Weise die gewünschte Dammform erzeugt werden kann und die Dammflanken befestigt werden können. Die Flankenformer 15 sind hierbei in ihrer Arbeitshöhe ebenfalls den Räumelementen 10a, 10b angepasst, um eine optimale Dammform zu erzielen.

Die Erfindung ist nicht auf die dargestellten Ausführungsbeispiele beschränkt. Abwandlungen und Kombinationen im Rahmen der Patentansprüche fallen ebenfalls unter die Erfindung.

## Patentansprüche

1. Dammformblech (1) zum Enddammaufbau nach dem Ausbringen von Pflanzgut, insbesondere Kartoffeln, zum gleichzeitigen Aufbau wenigstens zweier Dämme, mit zwei äußeren und wenigstens einem mittleren Räumelement (10a, 10b), wobei an dem Dammformblech (1) ein Sech (11) angeordnet ist, **dadurch gekennzeichnet, dass** das vorzugsweise als gezacktes Scheibensech ausgebildete Sech (11) im Bereich des wenigstens einen mittleren Räumelements (10b) als Vorlaufwerkzeug angeordnet ist.

2. Dammformblech nach dem vorhergehenden Anspruch, **dadurch gekennzeichnet, dass** ein Trennungskeil (12) des Räumelements (10b) einen Durchbruch (13) aufweist und dass das Sech (11) derart an dem Räumelement (10b) und/oder dem Dammformblech (1) angeordnet ist, dass es zumindest teilweise innerhalb des Räumelements (10b) läuft.

3. Dammformblech nach dem vorhergehenden Anspruch, **dadurch gekennzeichnet, dass** das Sech (11) im Inneren des Räumelements (10b) gelagert ist und durch den Durchbruch (13) des Trennungskeils (12) des Räumelements (10b) hindurch reicht.

4. Dammformblech nach einem der vorhergehenden Ansprüche, **dadurch gekennzeichnet, dass** das Sech (11) in Bezug auf seine Winkelstellung zur Fahrtrichtung verstellbar oder lenkbar, insbesondere hydraulisch lenkbar, an dem Räumelement (10b) angeordnet ist.

5. Dammformblech nach einem der vorhergehenden Ansprüche, **dadurch gekennzeichnet, dass** das Dammformblech (1) mehrere mittlere Räumelemente (10b) mit jeweils einem zugeordneten Sech (11) beinhaltet, wobei die Seche (11) gemeinsam verstellbar und/oder lenkbar sind.

6. Dammformblech nach einem der vorhergehenden Ansprüche **dadurch gekennzeichnet, dass** das Sech/die Seche (11) lösbar und/oder höhenverstellbar an dem/den Räumelement(en) (10b) angeordnet sind.

7. Dammformlech nach einem der vorhergehenden Ansprüche, **dadurch gekennzeichnet, dass** dem Sech (11) ein Abstreifer (28) zugeordnet ist.

8. Dammformblech nach einem der vorhergehenden Ansprüche, **dadurch gekennzeichnet, dass** der Durchbruch (13) des Trennungskeils (12) mittels eines Abdeckblechs (14) verschließbar ist.

9. Dammformblech nach einem der vorhergehenden Ansprüche, **dadurch gekennzeichnet, dass** die Räumelemente (10a, 10b) leicht lösbar an dem Dammformblech (1) befestigt sind.

10. Dammformblech nach einem der vorhergehenden Ansprüche, **dadurch gekennzeichnet, dass** im Wesentlichen mittig zwischen zwei Räumelementen (10a, 10b) jeweils ein vorzugsweise V-förmiger Muldenformer (30) an dem Dammformblech (1) angeordnet ist.

11. Dammformblech nach einem der vorhergehenden Ansprüche, **dadurch gekennzeichnet, dass** der Muldenformer (30) eine Bauhöhe (h) von maximal 40 % der Höhe (H) der Räumelemente (10a, 10b) aufweist.

12. Dammformblech nach einem der vorhergehenden Ansprüche, dadurch gekennzeichnet, dass der Muldenformer (30) bezogen auf die Fahrtrichtung in einer Linie mit den Räumelementen (10a, 10b) angeordnet ist.

13. Dammformblech nach einem der vorhergehenden Ansprüche, **dadurch gekennzeichnet, dass** der Muldenformer (30) an einem Firstblech (16) des Dammformbleches (1) angeordnet ist.

14. Dammformblech nach einem der vorhergehenden Ansprüche, **dadurch gekennzeichnet, dass** das wenigstens eine mittlere Räumelement (10b) austauschbar und/oder höhenverstellbar an dem Dammformblech (1) angeordnet ist.

15. Dammformblech nach einem der vorhergehenden Ansprüche, **dadurch gekennzeichnet, dass** das wenigstens eine mittlere Räumelement (10b) eine wesentlich geringere Arbeitshöhe (AH) aufweist als die äußeren Räumelemente (10a).

## Claims

1. A dam shaping blade (1) for building up an end dam after sowing or planting seed stock, particularly potatoes, and for simultaneously building up at least two dams, and having two outer and at least one center clearing element (10a, 10b), a coulter (11) being disposed on the dam shaping blade (1), **characterized in that** the coulter (11), preferably implemented as a toothed disc coulter, is disposed in the region of the at least one center clearing element (10b) as an advance tool.

2. The dam shaping blade according to the preceding claim, **characterized in that** a parting wedge (12) of the clearing element (10b) comprises a penetration (13) and that the coulter (11) is disposed on the clearing element (10b) and/or on the dam shaping blade (1) such that said coulter runs at least partially within the clearing element (10b).

3. The dam shaping blade according to the preceding claim, **characterized in that** the coulter (11) is supported in the interior of the clearing element (10b) and extends through the penetration (13) of the parting wedge (12) of the clearing element (10b).

4. The dam shaping blade according to any one of the preceding claims, **characterized in that** the coulter (11) is disposed on the clearing element (10b) such that the angle setting thereof relative to the travel direction is adjustable or steerable, particularly hydraulically steerable.

5. The dam shaping blade according to any one of the preceding claims, **characterized in that** the dam shaping blade (1) comprises several center clearing elements (10b), each associated with one coulter (11), wherein the coulters (11) are jointly adjustable and/or steerable.

6. The dam shaping blade according to any one of the preceding claims, **characterized in that** the coulter or coulters (11) are disposed on the clearing element(s) (10b) so as to be releasable and/or having adjustable height.

7. The dam shaping blade according to any one of the preceding claims, **characterized in that** a stripper (28) is associated with the coulter (11)

8. The dam shaping blade according to any one of the preceding claims, **characterized in that** the penetration (13) of the parting wedge (12) can be closed off by means of a cover plate (14).

9. The dam shaping blade according to any one of the preceding claims, **characterized in that** the clearing elements (10a, 10b) are attached to the dam shaping blade (1) and can be easily released.

10. The dam shaping blade according to any one of the preceding claims, **characterized in that** one each preferably V-shaped groove former (30) is disposed on the dam shaping blade (1) substantially centered between two clearing elements (10a, 10b).

11. The dam shaping blade according to any one of the preceding claims, **characterized in that** the groove former (30) has an installed height (h) of a maximum of 40% of the height (H) of the clearing elements (10a, 10b).

12. The dam shaping blade according to any one of the preceding claims, **characterized in that** the groove former (30) is disposed in a straight line with the clearing elements (10a, 10b) with respect to the travel direction.

13. The dam shaping blade according to any one of the preceding claims, **characterized in that** the groove former (30) is disposed on a ridge blade (16) of the dam shaping blade (1).

14. The dam shaping blade according to any one of the preceding claims, **characterized in that** the at least one center clearing element (10b) is disposed on the dam shaping blade (1) to be replaceable and/or adjustable in height.

15. The dam shaping blade according to any one of the preceding claims, **characterized in that** the at least one center clearing element (10b) comprises a substantially lower working height (AH) than the outer clearing elements (10a).

## Revendications

1. Tôle de buttage (1) pour la constitution d'une butte d'extrémité après l'épandage de plants, en particulier de pommes de terre, pour la constitution simultanée d'au moins deux buttes, avec deux éléments de dégagement extérieurs et au moins un élément de dégagement central (10a, 10b), sachant qu'un coutre (11) est disposé à la tôle de buttage (1), **caractérisée en ce que** le coutre (11) se présentant de préférence sous la forme d'un coutre à disque crénelé est disposé dans la zone de l'au moins un élément de dégagement central (10b) en tant qu'outil de tête.

2. Tôle de buttage selon la revendication précédente, caractérisée en ce qu'un coin de séparation (12) de l'élément de dégagement (10b) présente une percée (13) et que le coutre (11) est disposé à l'élément de dégagement (10b) et/ou la tôle de buttage (1) de telle manière qu'il se déplace au moins partiellement au sein de l'élément de dégagement (10b).

3. Tôle de buttage selon la revendication précédente, **caractérisée en ce que** le coutre (11) est logé au sein de l'élément de dégagement (10b) et qu'il traverse la percée (13) du coin de séparation (12) de l'élément de dégagement (10b).

4. Tôle de buttage selon l'une des revendications précédentes, **caractérisée en ce que** le coutre (11) est disposé à l'élément de dégagement (10b) de manière réglable ou orientable, en particulier orientable hydrauliquement, pour ce qui est de sa position angulaire par rapport au sens de la circulation.

5. Tôle de buttage selon l'une des revendications précédentes, **caractérisée en ce que** la tôle de buttage (1) comporte plusieurs éléments de dégagement centraux (10b) avec un coutre (11) qui leur est respectivement attribué, sachant que les coutres (11) sont conjointement réglables et/ou orientables.

6. Tôle de buttage selon l'une des revendications précédentes, **caractérisée en ce que** le/les coutre/coutres (11) est/sont disposé(s) à l'élément/aux éléments de dégagement (10b) de manière dissociable et/ou réglable en hauteur.

7. Tôle de buttage selon l'une des revendications précédentes, **caractérisée en ce qu'**un racleur (28) est attribué au coutre (11).

8. Tôle de buttage selon l'une des revendications précédentes, **caractérisée en ce que** la percée (13) du coin de séparation (12) peut être fermée au moyen d'une tôle de recouvrement (14).

9. Tôle de buttage selon l'une des revendications précédentes, **caractérisée en ce que** les éléments de dégagement (10a, 10b) sont fixés de manière facilement dissociable à la tôle de buttage (1).

10. Tôle de buttage selon l'une des revendications précédentes, **caractérisée en ce qu'**un constituteur de cuvettes (30), de préférence en forme de V, est respectivement disposé à la tôle de buttage (1), à une position essentiellement centrale entre deux éléments de dégagement (10a, 10b).

11. Tôle de buttage selon l'une des revendications précédentes, **caractérisée en ce que** le constituteur de cuvettes (30) présente une hauteur de construction (h) égale au maximum à 40 % de la hauteur (H) des éléments de dégagement (10a, 10b).

12. Tôle de buttage selon l'une des revendications précédentes, **caractérisée en ce que** le constituteur de cuvettes (30) est disposé en alignement avec les éléments de dégagement (10a, 10b) par rapport au sens de la circulation.

13. Tôle de buttage selon l'une des revendications précédentes, **caractérisée en ce que** le constituteur de cuvettes (30) est disposé à une tôle faîtière (16) de la tôle de buttage (1).

14. Tôle de buttage selon l'une des revendications précédentes, **caractérisée en ce que** l'au moins un élément de dégagement central (10b) est disposé de manière remplaçable et/ou réglable en hauteur à la tôle de buttage (1).

15. Tôle de buttage selon l'une des revendications précédentes, **caractérisée en ce que** l'au moins un élément de dégagement central (10b) présente une hauteur de travail (AH) nettement inférieure à celle des éléments de dégagement extérieurs (10a).
